# FASCICULE DE BREVET EUROPEEN

(11) **EP 0 536 018 B1**
(45) Date de publication et mention de la délivrance du brevet: **03.08.1994**
(21) Numéro de dépôt: 92402559.6
(22) Date de dépôt: 17.09.1992
(51) Int. Cl.: H05B 7/06

(54) **Electrode de paroi pour four métallurgique électrique à courant continu**
Wandelektrode für metallurgischen Elektrogleichstromofen
Wall electrode for metallurgical electric direct current furnace

(30) Priorité: 30.09.1991 FR 9112001
(43) Date de publication de la demande: 07.04.1993
(73) Titulaire: IRSID, F-92800 Puteaux (FR)
(72) Inventeur: Destannes, Philippe, F-57000 Metz (FR); Grosjean, Jean-Claude, F-59300 Valenciennes (FR); Maurer, Ghislain, F-57160 Chatel Saint Germain (FR); Lebrun, Christian, F-59990 Saultain (FR)
(74) Mandataire: Bouget, Lucien

(56) Documents cités:
- EP-A- 0 056 225
- EP-A- 0 235 465
- EP-A- 0 441 733
- FR-A- 2 572 873

## Description

L'invention est relative à une électrode de paroi pour four métallurgique électrique à courant continu destiné à l'élaboration des métaux à l'état liquide, notamment de l'acier.

Une électrode de ce type ayant les caractéristiques du préambule de la revendication 1 est connue du brevet français publié sous le n° 2 572 873. Cette électrode comprend donc une barre métallique, un embout en matériau bon conducteur de la chaleur et de l'électricité et un manchon également bon conducteur de la chaleur et de l'électricité. L'embout et le manchon sont énergiquement refroidis à l'eau. Le manchon entoure la barre sur une portion de sa longueur avec un jeu radial de façon à laisser un espace libre annulaire entre eux.

Cette technique présente un inconvénient. En effet, les ferrailles fondues dans le four pour fabriquer de l'acier liquide, contiennent souvent du plomb. Ce plomb fond, vient se rassembler au fond du four au voisinage de l'électrode, s'infiltre entre les réfractaires du four et la barre métallique et se répand irrégulièrement dans l'espace libre entre le manchon et la barre ; le plomb ainsi accumulé irrégulièrement dans l'espace libre crée des petits contacts localisés qui provoquent des amorçages électriques entre le manchon et la barre ; ces amorçages électriques détériorent le manchon.

On connaît également par le EP-A-O.178.981 une électrode de paroi comportant une partie massive en plomb intercalée entre le corps de l'électrode traversant la paroi et un embout en matériau bon conducteur de la chaleur et de l'électricité situé à l'extérieur de la paroi dans le prolongement du corps de l'électrode. On améliore ainsi le contact électrique entre le corps de l'électrode et l'embout conducteur.

Cependant, cette réalisation d'une partie de l'électrode par une pièce massive en plomb ne permet pas de trouver une solution au problème relatif à l'amorçage d'arcs électriques lorsque du plomb provenant des ferrailles fondues s'infiltrerait autour de l'électrode dans un espace libre entre manchon et barre.

On connaît aussi, par le document EP-56.225, une électrode de paroi formée par une pièce d'usure en acier qui recouvre entièrement l'extrémité supérieure d'une barre de cuivre refroidie, traversant la cuve du four, et servant de connexion électrique à la pièce d'usure. Une couche de métal de faible conductibilité thermique et à enthalpie de fusion élevée, de préférence du plomb, est prévue entre la pièce d'usure et la barre de cuivre pour absorber les surchauffes locales de la pièce d'usure qui, en l'absence de la dite couche de métal, pourraient se transmettre rapidement par conduction à la barre de cuivre et provoquer la fusion. Cette électrode ne permet pas non plus de résoudre les problèmes évoqués ci-dessus.

Le but de la présente invention est de remédier à cet inconvénient en proposant une électrode de paroi pour four métallurgique électrique à courant continu dont le fonctionnement ne soit pas perturbé par la présence de plomb dans les ferrailles.

A cet effet, l'invention a pour objet une électrode de paroi pour four métallurgique électrique à courant continu comprenant une barre métallique traversant la paroi du four, un manchon refroidi à l'eau et constitué d'un matériau bon conducteur de la chaleur et de l'électricité, coaxial à la barre et entourant celle-ci sur une partie de sa longueur à l'extérieur de la paroi du côté extérieur au four avec un jeu radial, de manière qu'il existe un espace annulaire entre la barre et le manchon refroidi et un embout en matériau bon conducteur de la chaleur et de l'électricité en contact avec le manchon refroidi et avec la barre à son extrémité extérieure à la paroi du côté extérieur au four, assurant ainsi la fermeture de l'extrémité de l'espace annulaire dirigée vers l'extérieur du four, caractérisée en ce qu'elle comporte en outre une pièce annulaire en un métal lourd à bas point de fusion entourant la barre dans une disposition telle que du métal lourd à l'état liquide se répande dans l'espace de forme annulaire ménagé entre la barre et le manchon refroidi, lorsque la pièce annulaire est mise en fusion pendant l'utilisation de l'électrode.

Dans un premier mode de réalisation, la pièce annulaire en métal lourd est constituée par une bague placée dans le prolongement du manchon refroidi à l'extrémité, située vers la paroi du four, de l'espace ménagé entre la barre et le manchon refroidi.

Dans un second mode de réalisation, la pièce annulaire en métal lourd est constituée par un manchon disposé à l'intérieur de l'espace annulaire et intercalé entre la barre et le manchon.

De préférence, le métal lourd et à bas point de fusion est du plomb.

Dès qu'on met sous tension une telle électrode, celle-ci s'échauffe et chauffe le plomb qui fond. Le plomb fondu occupe alors tout l'espace compris entre la barre métallique et le manchon bon conducteur de la chaleur et de l'électricité. La quantité de plomb fondu est suffisante pour assurer un bon contact thermique et électrique entre la barre et le manchon bon conducteur. Le plomb fondu provenant des ferrailles vient s'ajouter au plomb déjà présent et ne crée pas de petits contacts localisés responsables des amorçages électriques. Il n'y a donc plus d'amorçages électriques.

L'invention va maintenant être décrite plus en détail en regard des deux figures annexées.

La figure 1 est une vue en coupe d'un premier mode de réalisation de l'électrode implantée dans la paroi d'un four.

La figure 2 est une vue en coupe d'un deuxième mode de réalisation de l'électrode implantée dans la paroi d'un four.

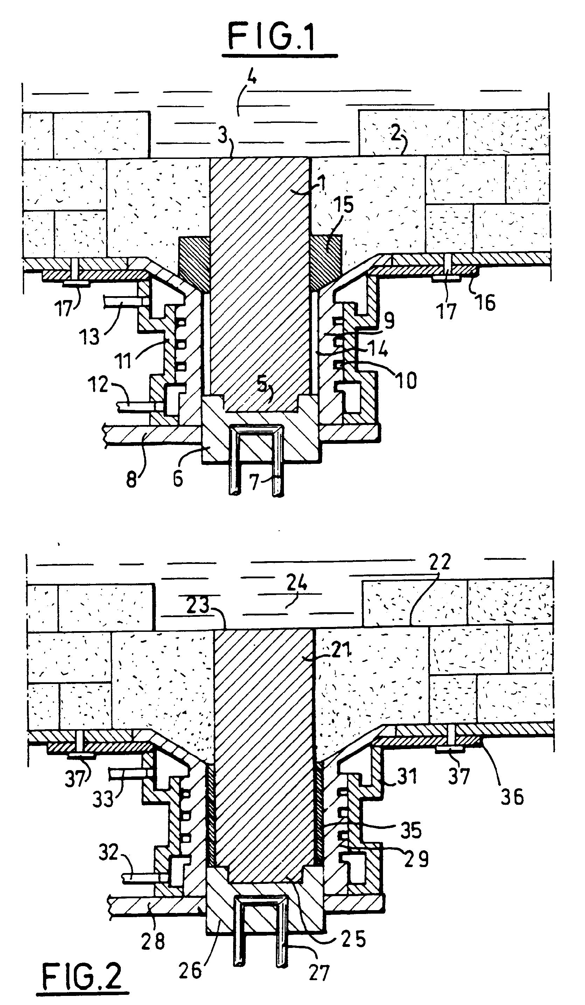

Dans le premier mode de réalisation représenté à la figure 1, l'électrode comprend une barre métallique 1 qui traverse la paroi 2 d'un four métallurgique électrique à courant continu tel qu'un four à arc destiné à la fabrication d'acier liquide par fusion de ferrailles. La barre est par exemple une billette en acier.

Par l'une de ses extrémités 3, la barre 1 est en contact avec l'acier liquide 4 contenu dans le four. L'autre extrémité 5 de la barre 1 dépasse sous la paroi 2 du four ; cette extrémité 5 est munie d'un embout 6 en cuivre refroidi par une circulation d'eau 7. L'embout 6 est en contact étroit avec un connecteur 8 également en cuivre et relié à une borne d'alimentation électrique non représentée. L'embout 6 est de diamètre légèrement supérieur à celui de la barre 1.

Un manchon 9 en cuivre bon conducteur de la chaleur et de l'électricité entoure la barre 1 sur la portion qui émerge de la paroi 2 du four. Ce manchon 9 est en contact étroit avec l'embout 6 et le connecteur 8.

Le manchon est muni à sa partie externe d'une rainure hélicoïdale 10 et il est entouré d'une chemise 11 munie d'une arrivée 12 d'eau et d'un départ 13 d'eau. Le manchon 9 avec sa rainure hélicoïdale et la chemise 11 forment un circuit dans lequel l'eau peut circuler et refroidir énergiquement le manchon 9.

Le manchon 9 a un diamètre intérieur sensiblement égal au diamètre extérieur de l'embout 6. Ce diamètre est supérieur à celui de la barre 1 et il reste un espace libre 14 entre le manchon 9 et la barre 1.

Au-dessus du manchon 9, une bague 15 entoure la barre 1 et ferme l'espace 14.

La bague 15 est en métal lourd et à bas point de fusion, de préférence en plomb.

L'ensemble est fixé à la paroi 2 du four par l'intermédiaire d'une plaque 16 et de vis 17.

Lorsque l'électrode est mise sous tension, la circulation de courant électrique échauffe la barre 1 qui par conduction échauffe la bague 15.

La bague 15 étant en plomb fond rapidement et le plomb fondu vient remplir l'espace 14 et assure un très bon contact électrique et thermique entre la barre 1 et le manchon 9, le volume de métal de la bague 15 étant prédéterminé de manière à être égal ou supérieur au volume de l'espace 14. Le plomb provenant des ferrailles et s'infiltrant entre la paroi 2 et la barre 1 vient s'ajouter au plomb fondu contenu dans l'espace 14 sans perturber le contact électrique.

Dans le deuxième mode de réalisation représenté à la figure 2, l'électrode comporte une barre métallique 21, par exemple une billette d'acier, traversant la paroi 22 d'un four métallurgique électrique à courant continu.

L'extrémité 23 de la barre 21 est en contact avec l'acier liquide 24. L'autre extrémité 25 est munie d'un embout 26 en cuivre refroidi par une circulation d'eau 27.

La barre 21 est entourée sur une partie de sa longueur par un manchon 35 en métal lourd et à bas point de fusion, par exemple du plomb.

Le manchon 35 est entouré par un manchon 29 bon conducteur de la chaleur et de l'électricité, par exemple en cuivre. Ce manchon 29 est identique au manchon 9 de la figure 1. Il est entouré d'une chemise 31 qui peut être alimentée en eau par les orifices 32 et 33. L'ensemble est fixé sur la paroi 22 du four par une plaque 36 et des vis 37.

L'électrode est reliée à une borne d'alimentation électrique (non représentée) par le connecteur 28.

Lorsque l'électrode est mise sous tension, elle s'échauffe par effet joule, échauffe et fait fondre le plomb du manchon 35 qui assure alors un excellent contact électrique entre la barre 21 et le manchon 29. Le plomb fondu provenant des ferrailles vient s'ajouter au plomb du manchon 35 sans perturber les contacts électriques et ainsi ne provoque pas d'amorçages électriques.

Dans le premier mode de réalisation, dès la première fusion de la bague 15, le plomb se retrouve dans la même disposition que dans le second mode de réalisation. Le premier mode de réalisation présente cependant l'avantage d'une construction plus facile de l'électrode, car l'espace 14 est généralement de faible dimension, et il est plus simple d'y faire couler le plomb automatiquement lors de la première fusion que d'y placer le manchon 35, de faible épaisseur, lors de l'assemblage des différentes parties de l'électrode.

## Revendications

1. Electrode de paroi pour four métallurgique électrique à courant continu comprenant une barre métallique (1, 21) traversant la paroi (2, 22) du four, un manchon (9, 29) refroidi à l'eau et constitué d'un matériau bon conducteur de la chaleur et de l'électricité, coaxial à la barre (1, 21) et entourant celle-ci sur une partie de sa longueur à l'extérieur de la paroi (2, 22) du côté extérieur au four avec un jeu radial, de manière qu'il existe un espace annulaire (14) entre la barre (1, 21) et le manchon refroidi (9, 29) et un embout (6, 26) en matériau bon conducteur de la chaleur et de l'électricité en contact avec le manchon refroidi (9, 29) et avec la barre (1, 21) à son extrémité extérieure à la paroi (2, 22) du côté extérieur au four, assurant ainsi la fermeture de l'extrémité de l'espace annulaire (14) dirigée vers l'extérieur du four, caractérisée en ce qu'elle comporte en outre une pièce annulaire (15, 35) en métal lourd à bas point de fusion entourant la barre (1, 21) dans une disposition telle que du métal lourd à l'état liquide se répande dans l'espace (14) de forme annulaire ménagé entre la barre (1, 21) et le manchon refroidi (9, 29), lorsque la pièce annulaire (15, 35) est mise en fusion pendant l'utilisation de l'électrode.

2. Electrode selon la revendication 1, caractérisée en ce que la pièce annulaire (15) en métal lourd est constituée par une bague placée dans le prolongement du manchon refroidi (9) à l'extrémité,dirigée vers l'intérieur du four, de l'espace (14) ménagé entre la barre (1) et le manchon refroidi (9).

3. Electrode selon la revendication 1, caractérisée en ce que la pièce annulaire (35) en métal lourd est constituée par un manchon disposé à l'intérieur de l'espace annulaire (14) et intercalé entre la barre (21) et le manchon (29).

4. Electrode selon l'une quelconque des revendications 1 à 3, caractérisée en ce que le métal lourd et à bas point de fusion constituant la pièce annulaire (15, 35) est du plomb.

## Patentansprüche

1. Wandelektrode für einen metallurgischen Elektrogleichstromofen mit einem die Wand (2, 22) des Ofens durchsetzenden Metallstab (1, 21), einer aus einem thermisch und elektrisch gut leitenden Material bestehenden wassergekühlten Muffe (9, 29), welche zum Stab (1, 21) koaxial ist und diesen auf einem Teil seiner Länge außerhalb der Wand (2, 22) auf der Außenseite des Ofens mit einem Radialspiel umgibt, derart, daß ein Ringraum (14) zwischen dem Stab (1, 21) und der gekühlten Muffe (9, 29) vorliegt, und einem Ansatz (6, 26) aus einem thermisch und elektrisch gut leitenden Material, der mit der gekühlten Muffe (9, 29) und mit dem Stab (1, 21) an seinem Ende außerhalb der Wand (2, 22) auf der Außenseite des Ofens in Berührung steht und so das Verschließen des zum Äußeren des Ofens gerichteten Endes des Ringraumes (14) gewährleistet, dadurch gekennzeichnet, daß sie ferner ein ringförmiges Teil (15, 35) aus Schwermetall mit niedrigem Schmelzpunkt aufweist, welches den Stab (1, 21) in einer solchen Stellung umgibt, daß sich Schwermetall im flüssigen Zustand in den ringförmigen Raum (14), der zwischen dem Stab (1, 21) und der gekühlten Muffe (9, 29) ausgebildet ist, ausbreitet, wenn das ringförmige Teil (15, 35) während der Verwendung der Elektrode zum Schmelzen gebracht wird.

2. Elektrode nach Anspruch 1, dadurch gekennzeichnet, daß das ringförmige Teil (15) aus Schwermetall durch einen in der Verlängerung der gekühlten Muffe (9) am zum Inneren des Ofen gerichteten Ende des zwischen dem Stab (1) und der gekühlten Muffe (9) ausgebildeten Raums (14) angeordneten Ring gebildet ist.

3. Elektrode nach Anspruch 1, dadurch gekennzeichnet, daß das ringförmige Teil (35) aus Schwermetall durch eine im Inneren des Ringraumes (14) angeordnete und zwischen den Stab (21) und die Muffe (29) zwischengelegte Muffe gebildet ist.

4. Elektrode nach irgendeinem der Ansprüche 1 bis 3, dadurch gekennzeichnet, daß das das ringförmige Teil (15, 35) bildende Schwermetall mit niedrigem Schmelzpunkt Blei ist.

## Claims

1. Wall electrode for a direct current electric metallurgical furnace comprising a metal bar (1, 21) extending through the wall (2, 22) of the furnace, a water-cooled sleeve (9, 29) and composed of material which is a good conductor of heat and electricity, coaxial with the bar (1, 21) and surrounding the bar over a part of its length outside the wall (2, 22) of the external side of the furnace with a radial clearance so that there is an annular space (14) between the bar (1, 21) and the cooled sleeve (9, 29) and an end member (6, 26) composed of a material which is a good conductor of heat and electricity in contact with the cooled sleeve (9, 29) and with the bar (1, 21) at its end outside the wall (2, 22) of the external side of the furnace, thus ensuring the closing of the end of the annular space (14) directed towards the outside of the furnace, characterized in that in addition it comprises an annular member (15, 35) composed of a heavy metal with a low melting point surrounding the bar (1, 21) in such an arrangement that the heavy metal in the liquid state spreads in the annular space (14) provided between the bar (1, 21) and the cooled sleeve (9, 29), when the annular member (15, 35) is made to melt during use of the electrode.

2. Electrode according to claim 1, characterized in that the annular member (15) of heavy metal is constituted by a ring placed in the extension of the cooled sleeve (9) at the end, directed towards the interior of the furnace, of the space (14) provided between the bar (1) and the cooled sleeve (9).

3. Electrode according to claim 1, characterized in that the annular member (35) of heavy metal is constituted by a sleeve arranged inside the annular space (14) and interposed between the bar (21) and the sleeve (29).

4. Electrode according to any one of claims 1 to 3, characterized in that the heavy metal having a low melting point which constitutes the annular member (15, 35) is lead.
